# EUROPÄISCHE PATENTSCHRIFT

(11) **EP 1 080 624 B1**
(45) Veröffentlichungstag und Bekanntmachung des Hinweises auf die Patenterteilung: **05.07.2006**
(21) Anmeldenummer: 00118367.2
(22) Anmeldetag: 24.08.2000
(51) Int. Cl.: A01C 5/06, A01C 21/00

(54) **Landwirtschaftliches Gerät zum Ausbringen von Gut**
Agricultural device for spreading a product
Dispositif agricole pour l'épandage d'un produit

(30) Priorität: 04.09.1999 DE 19942260
(43) Veröffentlichungstag der Anmeldung: 07.03.2001
(73) Patentinhaber: DEERE & COMPANY, Moline, Illinois 61265-8098 (US)
(72) Erfinder: Jüptner, Detlef, 66271 Kleinbittersdorf (DE)
(74) Vertreter: Holst, Sönke

(56) Entgegenhaltungen:
- EP-A- 0 894 426
- DE-A- 19 731 862
- US-A- 1 893 512
- US-A- 5 279 236
- US-A- 5 862 763
- US-A- 5 878 678

## Beschreibung

Die Erfindung betrifft ein landwirtschaftliches Gerät zum Ausbringen von Gut, insbesondere Saat und/oder Dünger in und/oder auf den Boden, mit einer ersten Ausbringeinheit und einer der ersten Ausbringeinheit nachlaufenden, zweiten Ausbringeinheit, sowie einem an der ersten Ausbringeinheit angeordneten Reihenräumer, der dem Ausbringbereich der zweiten Ausbringeinheit zugeordnet ist.

Reihenräumer, die auch als Furchenräumer bezeichnet werden, finden im Stande der Technik Verwendung, um lose auf der Bodenoberfläche liegende Rückstände, wie Stroh odgl., aus dem Arbeitsbereich einer Sä- oder Düngeeinheit zu räumen.

In der EP 894 426 A und der US 5 341 754 A ist ein derartiger Reihenräumer beschrieben, der an dem - die Säeinheit mit einem Träger verbindenden - Arm einer Säeinheit an einer ihr vorlaufenden Position angebracht ist. Dazu dient eine aufwendige Halterung in Form eines Parallelogrammes.

Weiterhin sind aus der US 5 862 763 A, US 2 611 331 A, der US 4 796 550 A, der FR 1 576 504 und der EP 453 420 A Reihenräumer bekannt, die (einer Säeinheit vorlaufend) separat an einem Rahmen des Sägeräts befestigt sind. Dadurch wird eine nachteilige Verlängerung des Gesamtaufbaus bedingt.

In der US 1 893 512 A wird eine Sämaschine beschrieben, bei der durch einen Furchenöffner zunächst eine relativ breite Furche geöffnet wird. In diese Furche wird Dünger eingebracht und dann wird sie teilweise geschlossen. In die verbleibende Furche wird dann Saatgut eingebracht. Bei dieser Sämaschine dient der Furchenöffner auch zum Räumen des Arbeitsbereichs des Säschars für das Saatgut einbringende Säschar.

Das der Erfindung zugrunde liegende Problem wird darin gesehen, eine kompakte und einfache Halterung eines Reihenräumers zu schaffen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, in an sich bekannter Weise zwei Ausbringeinheiten, bei denen es sich insbesondere um Säeinheiten und/oder Düngeeinheiten handelt, in Vorwärtsbewegungsrichtung des gesamten Geräts versetzt hintereinander anzuordnen. Erfindungsgemäß ist der Reihenräumer der zweiten, der ersten Ausbringeinheit nachlaufenden und gegenüber der ersten Ausbringeinheit seitlich versetzten Ausbringeinheit an der ersten Ausbringeinheit angebracht. Der Reihenräumer entfernt somit eventuelle Hindernisse, wie Unrat, Stroh, usw. von dem der zweiten Ausbringeinheit zugeordneten Bereich des Bodens.

Die Vorteile der Erfindung bestehen insbesondere darin, daß der Reihenräumer auf diese Weise insbesondere nachlaufend an der ersten, vorlaufenden Ausbringeinheit angebracht werden kann, so daß seine Halterung wesentlich einfacher und somit preiswerter als die im Stand der Technik verwendeten gestaltet werden kann. Außerdem erhält man einen relativ kompakten Aufbau.

Die Art der Anbringung des Reihenräumers an der ersten Ausbringeinheit ist im Rahmen des erfindungsgemäßen Gedankens beliebig. Es wäre denkbar, ihn wie im Stand der Technik (US 5 341 754 A) vorlaufend an der ersten Ausbringeinheit zu montieren; da er gegenüber dem Wirkungsbereich der ersten Ausbringeinheit in der Regel seitlich versetzt ist, dürfte seine Anbringung an der ersten Ausbringeinheit unproblematisch sein. Es bietet sich jedoch an, ihn nachlaufend an der ersten Ausbringeinheit zu befestigen.

Im konkreten ist zur Befestigung des Reihenräumers vorgeschlagen, ihn mittels einer Verbindungsstrebe direkt oder indirekt an einem Tragarm der ersten Ausbringeinheit zu befestigen. Der Tragarm haltert in an sich bekannter Weise die Ausbringeinheit und (in der Regel mittelbar) die zugehörigen Ausbringelemente - wie Furchenöffner, Andrückrad oder Säschar - am Gerät, insbesondere an einem an dessen Rahmen befestigten Träger. Während die Verbindungsstrebe bei direkter Befestigung unmittelbar am Tragarm fixiert ist, kann sie bei indirekter Befestigung an einer mit dem Tragarm verbundenen Strebe gelagert sein. Diese Strebe dient vorzugsweise auch zur Fixierung von Ausbringeinheiten.

Da der Reihenräumer in der Regel nicht starr an der Ausbringeinheit befestigt wird, sondern eventuellen Hindernissen ausweichen können soll, bietet sich an, die ihn halternde Verbindungsstrebe relativ zum Tragarm drehbar zu gestalten. Die Drehachse verläuft horizontal und quer zur Vorwärtsbewegungsrichtung des Geräts.

Es wäre grundsätzlich denkbar, den Reihenräumer nur mit seiner Gewichtskraft gegenüber dem Erdboden vorzuspannen, d. h. die Verbindungsstrebe frei drehbar am Tragarm anzubringen. Es erweist sich jedoch als zweckmäßig, ihn mittels einer an der Verbindungsstrebe angreifenden Feder vorzuspannen. Die Feder kann sich mit einem ersten Ende an der Verbindungsstrebe und mit einem zweiten Ende am Tragarm oder an der Stütze abstützen. Dabei ist eine variierbare Federkraft bevorzugt, die mittels eines Endes der Feder, das an unterschiedlichen Verrastpunkten arretierbar ist, realisiert werden kann.

Weiterhin ist es wünschenswert, den Reihenräumer gemeinsam mit der ersten Ausbringeinheit aushebbar zu gestalten. Dazu kann letztere an einem drehbaren Träger angebracht sein. Die Drehung des Trägers hat dann ein Ausheben der Ausbringeinheit und auch des Reihenräumers zur Folge.

Um den Reihenräumer gemeinsam mit der Ausbringeinheit auszuheben, wäre eine starr mit der Ausbringeinheit verbundene Verbindungsstrebe möglich, die sich im Arbeitsbetrieb allerdings als nachteilig erweist. Bevorzugt ist daher ein mit der Verbindungsstrebe verbundener Mitnehmer, der (nur) beim Ausheben an einem Element (insbesondere einem Ausbringelement oder einem ihm zugeordneten Halter) der Ausbringeinheit zum Anliegen kommt und bewirkt, daß die Verbindungsstrebe mit dem Reihenräumer ausgehoben wird. Auch ein Mitnehmer, der an einem beliebigen Element der Ausbringeinheit angebracht ist und beim Ausheben am Reihenräumer bzw. der Verbindungsstrebe zur Anlage kommt, wäre denkbar.

Schließlich erweist sich auch für die in Vorwärtsbewegungsrichtung des Geräts vorderste Ausbringeinheit ein Reihenräumer als zweckmäßig. Er kann in an sich bekannter Weise an dieser Ausbringeinheit angebracht sein und ihr vorlaufen.

In den Zeichnungen ist ein nachfolgend näher beschriebenes Ausführungsbeispiel der Erfindung dargestellt. Es zeigt:
- Fig. 1: eine Säeinheit einer Sämaschine mit einem erfindungsgemäßen Reihenräumer in Seitenansicht,
- Fig. 2: eine Draufsicht auf die Säeinheit der Figur 1,
- Fig. 3: einen größeren Ausschnitt der Sämaschine in rückwärtiger Ansicht,
- Fig. 4: eine schematische Gesamtansicht einer Sämaschine.

Die im folgenden beschriebene Sämaschine, die als Beispiel eines landwirtschaftlichen Geräts zum Ausbringen von Gut erläutert wird, dient zum Ausbringen von Saatgut und/oder Dünger und kann sowohl auf vorbereitetem Boden wie auch zur Direkt- und Mulchsaat benutzt werden.

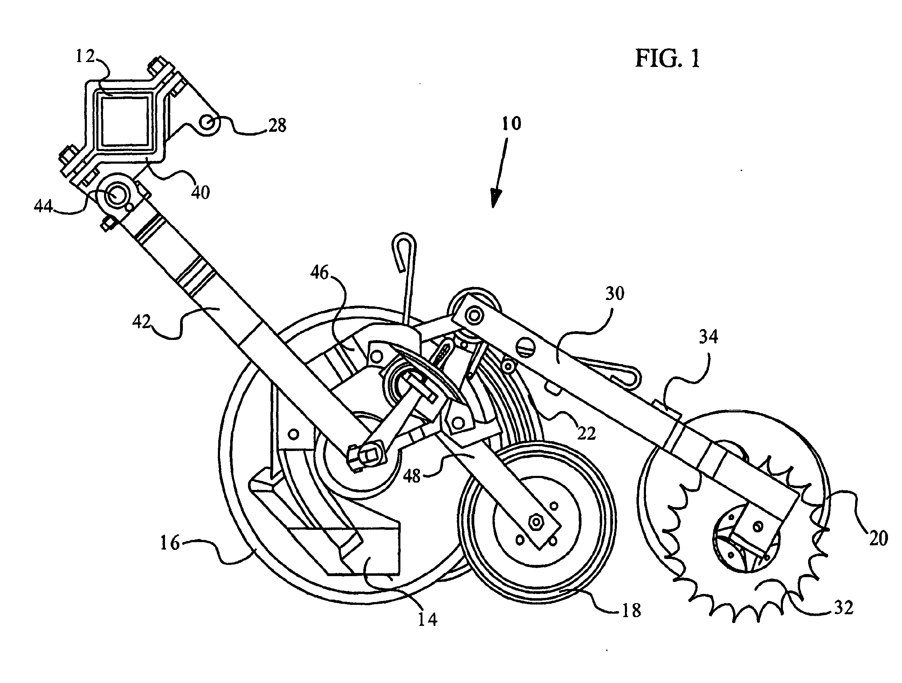

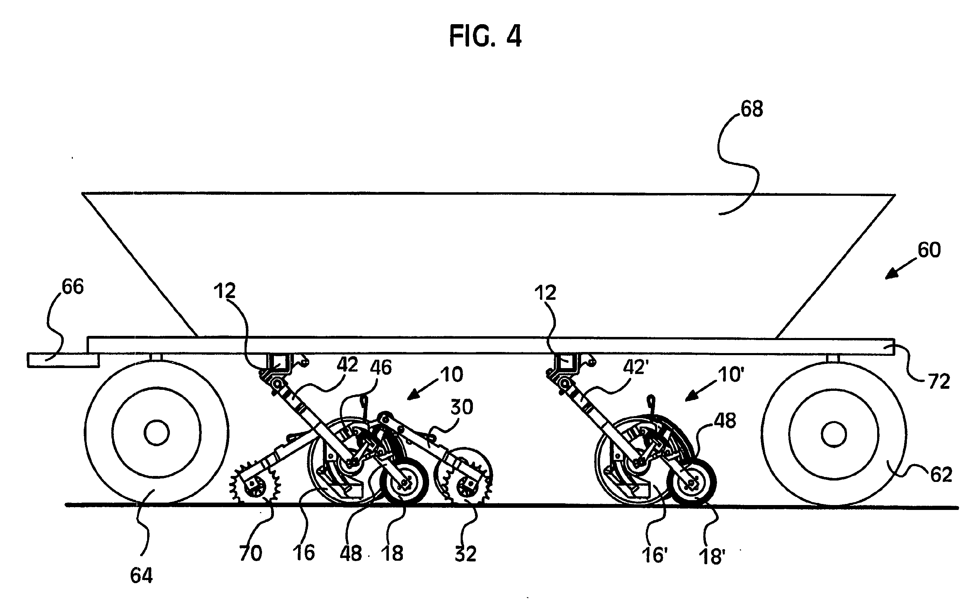

Unter anderem weist die Sämaschine einen mit einem in Figur 1 nicht eingezeichneten Rahmen (siehe aber Figur 4) verbundenen Träger 12, mehrere Säeinheiten 10, von denen eine in Figur 1 dargestellt ist, und wenigstens eine erfindungsgemäße Aufhängung 30 eines Reihenräumers 32 auf. In Figur 1 ist eine einzelne, insgesamt mit der Bezugsziffer 10 gekennzeichnete Säeinheit der Sämaschine wiedergegeben. Üblicherweise weist die Sämaschine mehrere Säeinheiten 10 auf, beispielsweise sind 6, 8, 10 oder 12 Säeinheiten 10 vorhanden.

Der Träger 12 ist als Vierkantrohr ausgebildet und in nicht gezeigten Lagern an der Unterseite des Rahmens um seine Längsachse schwenkbar angebracht, um die in Figur 1 dargestellte Säeinheit 10 zwischen einer Betriebsstellung, in der sie sich im Bodeneingriff befindet, und einer Außerbetriebsstellung zu verschwenken. Der Träger 12 erstreckt sich in der Regel über die Breite des Rahmens und kann eine Vielzahl gleicher Säeinheiten 10 aufnehmen.

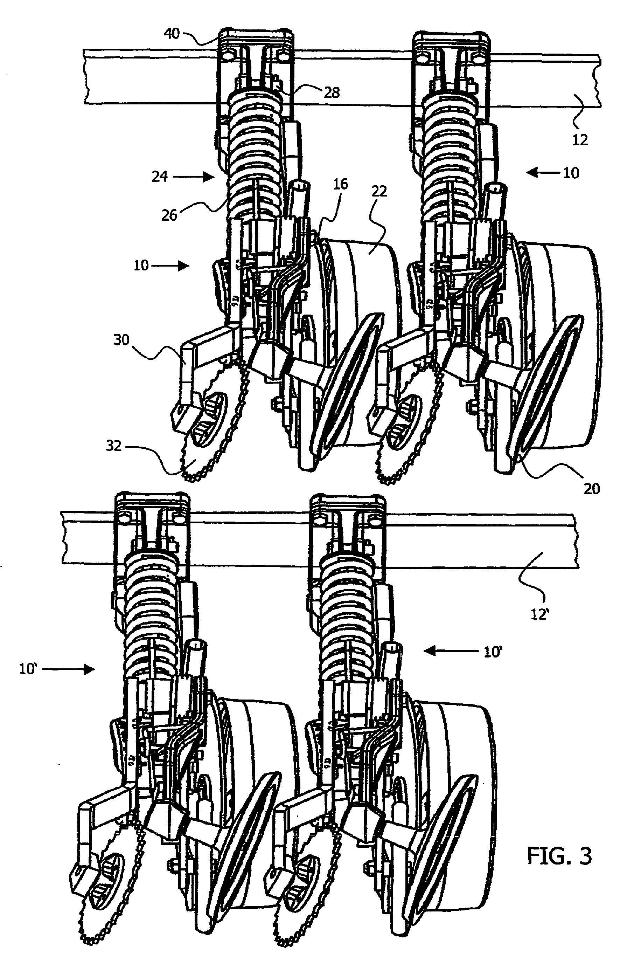

Die Säeinheit 10 enthält in an sich bekannter Weise eine Anschlußkonsole 40, einen Tragarm 42, einen Furchenöffner 16, ein Tiefeneinstellrad 22, ein Säschar 14, ein Andrückrad 18, ein Schließrad 20 und eine Druckvorrichtung 24 (sh. Figur 3), die in Figur 1 aus Gründen der Übersichtlichkeit nicht mit eingezeichnet ist. Die WO 98/05193 A, die EP 894 426 A und die DE 198 37 272 A offenbaren entsprechende Säeinheiten 10 und ihr Inhalt wird in diese Patentanmeldung durch Verweis einbezogen.

Die Anschlußkonsole 40 ist klammerartig ausgebildet und drehfest auf dem Träger 12 befestigt. Sie ist zweiteilig ausgeführt und kann an beliebiger Stelle auf den Träger 12 aufgeklemmt werden. Der Tragarm 42 erstreckt sich von vorn oben nach hinten unten und ist mit seinem voreilenden Endbereich in einem Tragarmlager 44 an der Anschlußkonsole 40 vertikal schwenkbar gehalten. In dem gegenüberliegenden unteren Endbereich des Tragarms 42 ist der Furchenöffner 16 drehbar angeschlossen. Im Arbeitsbetrieb wird die Säeinheit 10 von rechts nach links über den Boden bewegt. Zwischen beiden Endbereichen des Tragarms 42 zweigt eine Strebe 46 nach hinten und oben ab.

Der Furchenöffner 16 ist als eine Scheibe ausgebildet, die mit geringer Neigung zu der Fahrtrichtung in den Boden eindringt und dabei eine Furche für die Ablage des Saatguts bildet. Je nach der Bodenbeschaffenheit oder auch beim Auftreffen auf ein Hindernis kann der Furchenöffner 16 mit dem Tragarm um das Tragarmlager 46 gegen die Kraft der mit einer Feder 26 ausgestatteten Druckvorrichtung 24, die zwischen der Anschlußkonsole 40 und der Strebe 46 vorgesehen ist, nach oben ausweichen. Das drehbare Tiefeneinstellrad 22 ist seitlich neben dem Furchenöffner 16 angeordnet und dient dazu, die Tiefe der vom Furchenöffner 16 erzeugten Furche im Boden einzustellen.

Das Säschar 14 befindet sich in dem Schattenbereich des Furchenöffners 16 und ist derart starr mit dem Tragarm 42 verbunden, daß es unterhalb der Oberfläche des Bodens endet. Eingangsseitig ist das Säschar 14 mit einer Leitung zur Aufnahme von Saatgut aus einem Saatgutbehälter der Sämaschine verbunden.

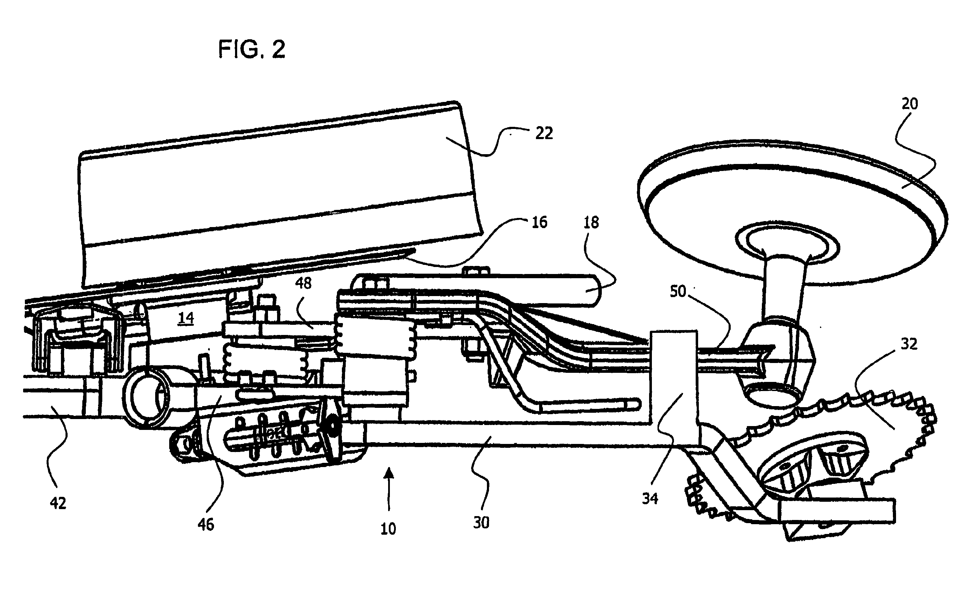

Das Andrückrad 18 und das Schließrad 20 sind mittels jeweils eines Halters 48 bzw. 50 (sh. Figur 2) schwenkbar und federbelastet an die Strebe 46 angeschlossen und als Scheiben ausgebildet. Das Andrückrad 18 drückt bei der Fahrt über das Feld in die vom Furchenöffner 16 geöffnete Furche abgelegtes Saatgut an, und das Schließrad ist derart geneigt, daß es von einer Seite Erdmaterial in die Furche schiebt und diese dabei schließt. Anstelle des Andrückrades 18 (oder zusätzlich dazu) kann auch ein weiteres Schließrad oder eine konkave Scheibe verwendet werden, die ebenfalls eine Furche öffnet, in die mittels eines ihr zugeordneten Schars Saatgut und/oder Düngematerial abgelegt wird. Die Federkraft, mit der das Andrückrad 18 und das Schließrad 20 auf den Boden einwirken, kann durch wählbare Auflagepunkte der entsprechenden Feder variiert werden.

Die Druckvorrichtung 24 enthält eine Feder 26 und konzentrisch in ihr und zu ihr einen Wegbegrenzer, die jeweils einerseits an der Anschlußkonsole 40, insbesondere an einem Druckvorrichtungslager 28, und andererseits an der Strebe 46 angreifen. In herkömmlicher Weise drückt die Feder 26 den Tragarm 42 auf den Boden, so daß der Furchenöffner 16 in diesen eindringt und eine Furche bildet.

Erfindungsgemäß ist am nachlauf enden Ende der Säeinheit 10 ein Reihenräumer 32 angebracht, der den Boden für eine nachfolgende, zweite Säeinheit 10' von Verunreinigungen, wie Mulch, Stroh, Laub, etc. reinigt. Der Reihenräumer 32 ist über eine Halterung 30 mit der Strebe 46 verbunden, wobei die Halterung 30 an der Strebe 46 um eine horizontale, quer zur Vorwärtsbewegungsrichtung verlaufende Achse drehbar gelagert ist. Außerdem kann die Halterung 30 mittels einer (nicht eingezeichneten) Feder derart vorgespannt werden, daß der Reihenräumer 32 mit einer definierten Kraft auf den Erdboden einwirkt. Der Reihenräumer 32 ist in an sich bekannter Weise scheibenförmig mit gezahntem Rand und weist eine quer zur Vorwärtsbewegungsrichtung der Säeinheit 10 verlaufende Drehachse auf, die gegenüber der Horizontalen seitlich geneigt ist.

Anhand der Figur 2 ist erkennbar, daß an der Oberseite der Verbindungsstrebe 30 ein plattenförmiger Mitnehmer 34 angebracht ist, der sich oberhalb des Halters 50 des Schließrades 20 erstreckt. Falls die Säeinheit 10 durch eine Drehung des Trägers 12 in die Außerbetriebsstellung verbracht wird, d. h. nach oben ausgehoben wird, wird auch die Halterung 30 des Reihenräumers 32 vom Halter 50 des Schließrades 20 mit verschwenkt, da der Mitnehmer 34 vom Halter 50 erfaßt wird, und letzter ihn mit nach oben verschwenkt. In der Betriebsstellung der Säeinheit 10 besteht jedoch kein Kontakt zwischen Halter 50 und Mitnehmer 34.

In Figur 3, in der der Mitnehmer 34 aus Gründen der Übersichtlichkeit nicht mit eingezeichnet ist, ist erkennbar, daß die Sämaschine an einem ersten Träger 12 befestigte erste Säeinheiten 10 aufweist, von denen in Figur 3 zwei eingezeichnet sind, der in Vorwärtsbewegungsrichtung zweite Säeinheiten 10' an einem zweiten Träger 12' nachfolgen, die gegenüber den ersten Säeinheiten seitlich versetzt sind. Die Reihenräumer 32 der ersten Säeinheiten 10 befreien den Boden im Bereich der jeweils nachfolgenden zweiten Säeinheiten 10' von Unrat und dergleichen. Anzumerken ist, daß die in Vorwärtsbewegungsrichtung der Sämaschine jeweils letzten Säeinheiten 10 selbstverständlich nicht mit einem Reihenräumer 32 auszustatten sind, da ihnen keine Säeinheit 10 mehr folgt. Den zweiten Säeinheiten 10' der Figur 3 folgen daher noch dritte Säeinheiten. Die in Vorwärtsbewegungsrichtung ersten Säeinheiten 10 der Sämaschine können mit konventionellen Reihenräumern versehen sein, die an der vorlaufenden Seite der Säeinheit 10 angebracht sind, wie beispielsweise in der EP 894 426 A beschrieben.

Der Gesamtaufbau einer entsprechenden Sämaschine 60 ist in Figur 4 dargestellt. Die Sämaschine 60 weist einen Rahmen 72 auf, der sich durch Räder 62 auf dem Boden abstützt und wird mittels einer Deichsel 66 oder Anhängevorrichtung von einem nicht eingezeichneten Zugfahrzeug, insbesondere einem Ackerschlepper, (in Figur 4 von rechts nach links) über ein Feld bewegt. Auf dem Rahmen 72 befindet sich ein Saatgutbehälter 68, der mit den Säscharen 14 in Verbindung steht. Die erste Säeinheit 10 ist mit einem vorlaufenden Reihenräumer 70 ausgestattet, der wie in der EP 894 426 A beschrieben gestaltet sein kann, und den von der ersten Säeinheit 10 zu bearbeitenden Bereich des Bodens von Unrat, wie Stroh usw. reinigt. Die erste Säeinheit 10 entspricht ansonsten der in den Figuren 1 bis 3 gezeigten Säeinheit 10. Die zweite, der ersten Säeinheit 10 nachlaufende Säeinheit 10' weist keinen Reihenräumer 32 auf, da der von ihr zu bearbeitende Bodenbereich bereits durch den an der ersten Säeinheit 10 befestigten Reihenräumer 32 gereinigt wurde, und ihr auch keine Säeinheit mehr nachläuft.

## Patentansprüche

1. Landwirtschaftliches Gerät zum Ausbringen von Gut, insbesondere Saat und/oder Dünger in und/oder auf den Boden, mit einer ersten Ausbringeinheit (10) und einer der ersten Ausbringeinheit (10) nachlaufenden, zweiten Ausbringeinheit (10'), sowie einem an der ersten Ausbringeinheit (10) angeordneten Reihenräumer (32), der dem Ausbringbereich der zweiten Ausbringeinheit (10') zugeordnet ist, **dadurch gekennzeichnet, dass** die erste Ausbringeinheit (10) relativ zur zweiten Ausbringeinheit (10') seitlich versetzt ist.

2. Landwirtschaftliches Gerät nach Anspruch 1, **dadurch gekennzeichnet, daß** die erste und/oder zweite Ausbringeinheit (10, 10') eine Säeinheit ist.

3. Landwirtschaftliches Gerät nach einem der vorhergehenden Ansprüche, **dadurch gekennzeichnet, daß** der Reihenräumer (32) nachlaufend an der ersten Ausbringeinheit (10) angebracht ist.

4. Landwirtschaftliches Gerät nach einem der Ansprüche 1 bis 3, **dadurch gekennzeichnet, daß** die erste Ausbringeinheit (10) über einen Tragarm (42) am Gerät, insbesondere an einem Träger (12) des Geräts befestigt ist, und daß der Reihenräumer (32) mittels einer Verbindungsstrebe (30) mittelbar oder unmittelbar am Tragarm (42) befestigt ist.

5. Landwirtschaftliches Gerät nach Anspruch 4, **dadurch gekennzeichnet, daß** die Verbindungsstrebe (30) an einer mit dem Tragarm (42) verbundenen Strebe (46) befestigt ist, an der vorzugsweise Ausbringelemente der ersten Ausbringeinheit (10) befestigt sind.

6. Landwirtschaftliches Gerät nach Anspruch 4 oder 5, **dadurch gekennzeichnet, daß** die Verbindungsstrebe (30) relativ zum Tragarm (42) um eine horizontale Achse drehbar gelagert ist.

7. Landwirtschaftliches Gerät nach einem der vorhergehenden Ansprüche, **dadurch gekennzeichnet, daß** der Reihenräumer (32) mittels einer Feder in Richtung auf den Boden vorgespannt ist.

8. Landwirtschaftliches Gerät nach Anspruch 7, **dadurch gekennzeichnet, daß** sich die Feder an einem ersten Ende an der Verbindungsstrebe (30) und an einem zweiten Ende direkt oder indirekt am Tragarm (42), insbesondere an der Stütze (46), abstützt.

9. Landwirtschaftliches Gerät nach einem der vorhergehenden Ansprüche, **dadurch gekennzeichnet, daß** der Reihenräumer (32) mit der ersten Ausbringeinheit (10) aushebbar ist.

10. Landwirtschaftliches Gerät nach Anspruch 9, **gekennzeichnet durch** einen Mitnehmer (34), der beim Ausheben der ersten Ausbringeinheit (10) eine Verbindung zwischen der Verbindungsstrebe (30) und einem Element der ersten Ausbringeinheit (10) herstellt und den Reihenräumer (32) aushebt.

11. Landwirtschaftliches Gerät nach einem der vorhergehenden Ansprüche, **dadurch gekennzeichnet, daß** der ersten Ausbringeinheit (10) ein Reihenräumer (70) zugeordnet ist, der ebenfalls an der ersten Ausbringeinheit (10) angebracht ist und ihr vorläuft.

## Claims

1. Agricultural implement for distributing material, in particular seeds and/or fertilisers into and/or onto the ground, with a first ground working unit (10) and a second ground working unit (10') following the first ground working unit (10), and also a row cleaner (32), which is arranged on the first ground working unit (10) and which is assigned to the ground working area of the second ground working unit (10'), **characterised in that** the first ground working unit (10) is laterally offset relative to the second ground working unit (10').

2. Agricultural implement according to Claim 1, **characterised in that** the first and/or second ground working unit (10, 10') is a sowing unit.

3. Agricultural implement according to one of the preceding claims, **characterised in that** the row cleaner (32) is attached to the first ground working unit (10) to follow it.

4. Agricultural implement according to one of Claims 1 to 3, **characterised in that** the first ground working unit (10) is fastened to the implement via a carrying arm (42), in particular is fastened to a carrier (12) of the implement, and that the row cleaner (32) is fastened indirectly or directly to the carrying arm (42) by means of a holding arrangement (30).

5. Agricultural implement according to Claim 4, **characterised in that** the holding arrangement (30) is fastened to a support (46), which is connected to the carrying arm (42) and to which ground working elements of the first ground working unit (10) are preferably fastened.

6. Agricultural implement according to Claim 4 or 5, **characterised in that** the holding arrangement (30) is disposed to be rotatable relative to the carrying arm (42) around a horizontal axis.

7. Agricultural implement according to one of the preceding claims, **characterised in** the row cleaner (32) is biased towards the ground by means of a spring.

8. Agricultural implement according to Claim 7, **characterised in that** the spring is supported on the holding arrangement (30) at a first end and is supported directly or indirectly on the carrying arm (42), in particular on the support (46), at a second end.

9. Agricultural implement according to one of the preceding claims, **characterised in that** the row cleaner (32) can be raised with the first ground working unit (10).

10. Agricultural implement according to Claim 9, **characterised by** a plate (34), which, when the first ground working unit (10) is raised, forms a connection between the holding arrangement (30) and an element of the first ground working unit (10) and raises the row cleaner (32).

11. Agricultural implement according to one of the preceding claims, **characterised in that** associated with the first ground working unit (10) is a row cleaner (70), which is also attached to the first ground working unit (10) and runs in front of it.

## Revendications

1. Machine agricole destinée à distribuer des matières, en particulier des semences et/ou des engrais dans et/ou sur le sol, comportant un premier dispositif de distribution (10) et un deuxième dispositif de distribution (10'), monté en aval du premier dispositif de distribution (10), ainsi qu'un soc (32), qui est monté sur le premier dispositif de distribution (10) et qui est associé à la zone de distribution du deuxième dispositif de distribution (10'), **caractérisée en ce que** le premier dispositif de distribution (10) est décalé latéralement par rapport au deuxième dispositif de distribution (10').

2. Machine agricole selon la revendication 1, **caractérisée en ce que** le premier et/ou le deuxième dispositif de distribution (10, 10') est une unité de semoir.

3. Machine agricole selon l'une quelconque des revendications précédentes, **caractérisée en ce que** le soc (32) est monté en aval sur le premier dispositif de distribution (10).

4. Machine agricole selon l'une quelconque des revendications 1 à 3, **caractérisée en ce que** le premier dispositif de distribution (10) est fixé au moyen d'un bras de support (42) sur la machine, en particulier sur une traverse (12) de la machine, et **en ce que** le soc (32) est fixé au moyen d'une entretoise de liaison (30) indirectement ou directement sur le bras de support (42).

5. Machine agricole selon la revendication 4, **caractérisée en ce que** l'entretoise de liaison (30) est fixée sur une entretoise (46), qui est reliée au bras de support (42) et sur laquelle sont fixés de préférence des éléments distributeurs du premier dispositif de distribution (10).

6. Machine agricole selon la revendication 4 ou 5, **caractérisée en ce que** l'entretoise de liaison (30) est montée rotative par rapport au bras de support (42) autour d'un axe horizontal.

7. Machine agricole selon l'une quelconque des revendications précédentes, **caractérisée en ce que** le soc (32) est précontraint vers le sol par un ressort.

8. Machine agricole selon la revendication 7, **caractérisée en ce que** le ressort prend appui avec une première extrémité sur l'entretoise de liaison (30) et avec une deuxième extrémité directement ou indirectement sur le bras de support (42), en particulier sur le support (46).

9. Machine agricole selon l'une quelconque des revendications précédentes, **caractérisée en ce que** le soc (32) peut être relevé conjointement avec le premier dispositif de distribution (10).

10. Machine agricole selon la revendication 9, **caractérisée par** un taquet d'entraînement (34) qui, au moment du relevage du premier dispositif de distribution (10), établit une liaison entre l'entretoise de liaison (30) et un élément du premier dispositif de distribution (10) et relève le soc (32).

11. Machine agricole selon l'une quelconque des revendications précédentes, **caractérisée en ce qu'**un soc (70) est associé au premier dispositif de distribution (10), lequel est également monté sur le premier dispositif de distribution (10) et est disposé en amont de celui-ci.
